(19) **Europäisches Patentamt European Patent Office Office européen des brevets**

(11) **EP 4 737 598 A1**

(12) **EUROPEAN PATENT APPLICATION**

(43) Date of publication:
06.05.2026 Bulletin 2026/19

(21) Application number: 25212968.9

(22) Date of filing: 03.11.2025

(51) International Patent Classification (IPC):
*C22B 3/44* (2006.01)     *C22B 7/00* (2006.01)
*C22B 11/00* (2006.01)     *C02F 1/70* (2023.01)

(52) Cooperative Patent Classification (CPC):
**C22B 3/44; C02F 1/70; C22B 7/009; C22B 11/048**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 04.11.2024 BE 202405754
04.11.2024 BE 202405755

(71) Applicant: **Indaver nv**
**9130 Beveren (BE)**

(72) Inventors:
• **MERTENS, Martijn**
**9130 Beveren (BE)**
• **PLUCKERS, Geert**
**9130 Beveren (BE)**

(74) Representative: **Brantsandpatents bv**
**Pauline Van Pottelsberghelaan 24**
**9051 Ghent (BE)**

(54) **METHOD FOR RECOVERING PRECIOUS METALS FROM AQUEOUS WASTE STREAMS**

(57)     The present invention relates to a method for recovering one or more precious metals from an aqueous waste stream, wherein the aqueous waste stream is mixed with one or more thiosulfates whereby the one or more precious metals are precipitated into a precipitate, and wherein the precipitate is separated.

EP 4 737 598 A1

Processed by Luminess, 75001 PARIS (FR)

**Description**

## TECHNICAL FIELD

The invention relates to a method for recovering one or more precious metals from an aqueous waste stream, as well as a use.

## PRIOR ART

Homogeneous catalysts are catalysts that are in the same phase as the reactants. In the pharmaceutical and chemical industries, these catalysts often consist of organometallic complexes that are dissolved in the reaction mixture. After the reaction, the catalysts enter the liquid phase of the waste materials, whether or not partially.

Certain homogeneous catalysts contain valuable metals, such as precious metals. Precious metals are rare elements of high economic value. They are the most stable metals, making them very useful catalysts.

Moreover, recently under the Critical Raw Materials Act, more emphasis has been placed on the necessity of a secure supply and promoting the recycling of critical materials, which is directly related to the need for improved recovering techniques for valuable metal catalysts from liquid waste streams.

There is a need for an improved purification/recovering these precious metal catalysts from aqueous waste streams.

## SUMMARY OF THE INVENTION

The invention concerns a method for recovering one or more precious metals from an aqueous waste stream according to claim 1.

It has been determined that thiosulfates can be used for precipitating precious metals from aqueous waste streams. It has been found that this also occurs without the formation of substances such as for example $SO_2$.

Thiosulfates can precipitate precious metals from solutions, even at low concentrations. This makes it possible to recover valuable metals from dilute waste streams where other methods might not be economical or effective.

This improved method for recovering precious metals from aqueous waste streams makes it possible to recover precious metals efficiently and effectively, which contributes to the sustainable use of these valuable resources.

In a second aspect, the invention concerns a use according to claim 16.

## DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

The terms "waste stream", "waste materials" and "liquid waste materials" as used in the text all refer to liquid industrial waste materials, such as from the pharmaceutical and/or fine-chemical industry.

The term "precious metals" as used in the text is intended to mean elements that in the general prior art are considered precious metals, namely ruthenium (Ru), rhodium (Rh), palladium (Pd), osmium (Os), iridium (Ir), platinum (Pt), gold (Au) and silver (Ag). The term "platinum-group metals" or "PGM" as used in the text is intended to mean precious metals that belong to the platinum-group metals, namely ruthenium (Ru), rhodium (Rh), palladium (Pd), osmium (Os), iridium (Ir), platinum (Pt).

The term "recover" refers to the process of extracting or recovering certain materials or substances from a mixture, waste stream or used products in order to reuse or recycle them. In the context of precious metals, recovering means that these valuable metals are separated and purified from a liquid, preferably aqueous, waste stream, whereby the metals are converted from a non-usable form back to a usable, optionally pure, form. The purpose of recovering is to increase the availability of materials, reduce waste, and improve the sustainability of resources.

The term "thiosulfates" refers to salts of thiosulfuric acid and form a class of ionic sulfur compounds with the overall formula $S_2O_3^{2-}$.

The term "TMT" is synonymous with "trimercapto-s-triazine trisodium salt" and "1,3,5-Triazine-2,4,6-trithiol trisodium salt" and refers to the component with CAS number 17766-26-6 and chemical formula C3N3S3Na3.

As used in this document, the articles "a", "an" and "the" refer to both the singular and the plural, unless the context clearly indicates otherwise. For example, "a segment" means one or more segments.

The terms "comprise", "comprising", "consist of", "consisting of", "provided with", "contain", "containing", "encompass", "encompassing", "include" and "including" are used herein as synonyms and are intended as inclusive or open terms indicating the presence of what follows, without excluding or preventing the presence of other components, characteristics, elements, members or steps known from or disclosed in the prior art.

Quoting numerical intervals by endpoints comprises all integers, fractions and/or real numbers between the endpoints, these endpoints included.

In a first aspect, the invention concerns a method for recovering o one or more precious metals from a liquid waste stream, preferably an aqueous waste stream.

In an embodiment, the liquid waste stream is a solvent-borne waste stream or an aqueous waste stream or a combination thereof.

In a preferred embodiment, the liquid, preferably aqueous, waste stream is mixed with one or more thiosulfates whereby the one or more precious metals are precipitated into a precipitate, and wherein the precipitate is separated.

In another preferred embodiment, the liquid waste stream is mixed with one or more additives whereby the one or more precious metals are precipitated into a precipitate, and wherein the precipitate is separated.

In a particularly preferred embodiment, the one or more precious metals are selected from: platinum (Pt), palladium (Pd), rhodium (Rh) and/or ruthenium (Ru), wherein the liquid, preferably aqueous, waste stream is mixed with one or more thiosulfates whereby the one or more precious metals are precipitated into a precipitate, and wherein the precipitate is separated.

The aqueous waste stream is a liquid waste stream comprising water. In one embodiment, the aqueous waste stream comprises water in an amount of more than 20 wt.%, preferably more than 30 wt.%, more preferably more than 40 wt.%, even more preferably more than 50 wt.%, even more preferably more than 60 wt.%, even more preferably more than 70 wt.%, even more preferably more than 80 wt.%, even more preferably more than 90 wt.%.

In another or further embodiment, the aqueous waste stream comprises water in an amount between 30 and 99.9 wt.%, preferably between 40 and 99.9 wt.%, more preferably between 50 and 99.9 wt.%, even more preferably between 60 and 99.9 wt.%, still more preferably between 70 and 99.9 wt.%, still more preferably between 80 and 99.9 wt.%, still more preferably between 90 and 99.9 wt.%.

In another embodiment, the liquid waste stream is a solvent-borne waste stream, such as a liquid waste stream comprising organic solvents. In an embodiment, the liquid waste stream comprising organic solvents comprises the organic solvents in an amount of more than 30 wt.%, preferably more than 40 wt.%, more preferably more than 50 wt.%, even more preferably more than 60 wt.%, still more preferably more than 70 wt.%, still more preferably more than 80 wt.%, still more preferably more than 90 wt.%.

In another or further embodiment, the liquid waste stream comprising organic solvents comprises the organic solvents in an amount between 30 and 99.9 wt.%, preferably between 40 and 99.9 wt.%, more preferably between 50 and 99.9 wt.%, even more preferably between 60 and 99.9 wt.%, still more preferably between 70 and 99.9 wt.%, still more preferably between 80 and 99.9 wt.%, still more preferably between 90 and 99.9 wt.%.

Examples of organic solvents that can be present in the liquid waste materials are: aniline, acetic acid, acetone, acetonitrile, benzene, bromobenzene, butanol, butanone, chloroform, cyclohexane, cyclopentane, dichloromethane, diethyl ether, diglyme, 1 ,2-dimethoxyethane, dimethylformamide, dimethyl sulfoxide, dioxane, ethanol, ethyl acetate, ethylene bromide, ethylenediamide, isopropanol, isopropyl acetate, carbon tetrachloride, methanol, methyl isobutyl ketone, formic acid, morpholine, nitrobenzene, N-methylpyrrolidone, pentane, propanol, pyridine, tetrahydrofuran, toluene, and xylene.

In another embodiment, the liquid waste stream comprises water and organic solvents.

It is to be understood that the precious metals that are recovered in the present method are present in the supplied liquid, preferably aqueous, waste stream. The liquid, preferably aqueous, waste stream thus comprises the one or more precious metals.

In an embodiment, the precious metals are present in the liquid, preferably aqueous, waste stream as catalysts, preferably the precious metals are present as homogeneous catalysts in the liquid, preferably aqueous, waste stream. It is known that recovering homogeneous catalysts from a liquid, preferably aqueous, waste stream can be challenging, because they are in the same phase as the waste stream. However, with the method of the present invention it becomes possible to make the precious metals reusable, which offers a considerable advantage.

However, it is also possible that the catalyst, thus the precious metals, are not in solution. This is possible, for example, when sediment settles out due to impurities (with precious metal), when small quantities of precious metal coagulate over a long time whereby a precipitate is formed, or when the waste stream was a heterogeneous mixture from the start.

In an embodiment, the one or more precious metals are selected from: ruthenium (Ru), rhodium (Rh), palladium (Pd), osmium (Os), iridium (Ir), platinum (Pt), gold (Au), silver (Ag), or a combination thereof.

The precious metals are preferably platinum-group metals (PGM). In an embodiment, the one or more precious metals are selected from: ruthenium (Ru), rhodium (Rh), palladium (Pd), osmium (Os), iridium (Ir), platinum (Pt), or a combination thereof. In another or further embodiment, the one or more precious metals are selected from: ruthenium (Ru), rhodium (Rh), palladium (Pd), platinum (Pt), or a combination thereof. In another or further embodiment, the one or more precious metals are selected from: ruthenium (Ru), palladium (Pd), or a combination thereof.

In an embodiment, at least one type of precious metal is recovered, wherein the precious metal is selected from: ruthenium (Ru), rhodium (Rh), palladium (Pd), osmium (Os), iridium (Ir), platinum (Pt), gold (Au) and silver (Ag). The precious metal is preferably a platinum-group metal. In an embodiment, the precious metal is selected from: ruthenium (Ru), rhodium (Rh), palladium (Pd), osmium (Os), iridium (Ir), and platinum (Pt). In another or further embodiment, the precious metal is selected from: ruthenium (Ru), rhodium (Rh), palladium (Pd), platinum (Pt). In another or further embodiment, the precious metal is selected from: ruthenium (Ru), and palladium (Pd). In another or further embodiment, the precious metal is palladium (Pd).

In an embodiment, one type of precious metal is recovered, wherein the precious metal is selected from: ruthenium (Ru), rhodium (Rh), palladium (Pd), osmium (Os), iridium (Ir), platinum (Pt), gold (Au) and silver (Ag). The precious metal is preferably a platinum-group metal. In an embodiment, the precious metal is selected from: ruthenium (Ru), rhodium (Rh), palladium (Pd), osmium (Os), iridium (Ir), and platinum (Pt). In another or further embodiment, the precious metal is selected from: ruthenium (Ru), rhodium (Rh), palladium (Pd), platinum (Pt). In another or further embodiment, the precious metal is selected from: ruthenium (Ru), and palladium (Pd). In another or further embodiment, the precious metal is palladium (Pd).

In an embodiment, one or more precious metals are recovered, wherein one type of precious metal selected from ruthenium (Ru), rhodium (Rh), palladium (Pd), osmium (Os), iridium (Ir), platinum (Pt), gold (Au) and silver (Ag), preferably ruthenium (Ru), rhodium (Rh), palladium (Pd), or platinum (Pt), constitutes at least 80 wt.% of the recovered precious metals. In a further embodiment, one precious metal constitutes at least 85, 90, 95, or 99 wt.% of the recovered precious metals.

In a preferred embodiment, the invention concerns a method for recovering at least palladium from an aqueous waste stream. This method has proven particularly advantageous for precipitating palladium. The aqueous waste stream is mixed with one or more thiosulfates, whereby the palladium precipitates into a precipitate. This precipitate is subsequently separated by means of filtration.

This method makes it possible to efficiently and effectively recover palladium from aqueous waste streams, which contributes to the sustainability and cost-effectiveness of industrial processes in the pharmaceutical and chemical industry.

In an embodiment, the precious metals are present in the waste stream in a total concentration from 1 to 2,000 ppm, preferably between 10 and 1,500 ppm, or more preferably between 10 and 1,400 ppm, even more preferably between 10 and 1,300 ppm, even more preferably between 10 and 1,250 ppm, depending on the catalyst system used and the process of origin.

In an embodiment, the mixing is performed at a pH of at most 6, preferably at most 3.5, more preferably at most 3. In another embodiment, the mixing is performed at a pH of at least 7, preferably at least 8, more preferably at least 8.5.

In another or further embodiment, the mixing is performed at a pH between 1 and 6, preferably between 1 and 3.5, more preferably between 1 and 3. It has been found that the precipitation of the precious metals proceeds optimally in an acidic medium.

In another or further embodiment, the mixing is performed at a pH between 0 and 6, preferably between 0 and 3.5, more preferably between 0 and 3, even more preferably between 0 and 1.5. It has been found that the precipitation of the precious metals proceeds optimally in an acidic medium.

The pH control can be performed as known in the prior art, but is preferably performed by addition of a strong acid such as sulfuric acid or hydrochloric acid, preferably hydrochloric acid, or by addition of a strong base such as sodium hydroxide.

In an embodiment, the mixing is performed at a temperature between 20 and 150°C, preferably between 20 and 100°C, more preferably between 20 and 70°C. In another or further embodiment, the mixing is performed at room temperature (20-23°C) or at an elevated temperature between 50 and 70°C.

In an embodiment, the liquid, preferably aqueous, waste stream is mixed with the one or more thiosulfates for a minimum of 5 minutes, preferably for 2-48 hours, preferably 2-24 hours, preferably for 2-8 hours.

In an embodiment, the liquid waste stream has a dynamic viscosity of less than 1,000 mPa·s, preferably less than 500 mPa·s, more preferably less than 250 mPa·s, measured at 20 °C. If the viscosity is higher than these values, the waste stream can be diluted with water or mixed under heating, for example to 40-60 °C, to improve the fluidity.

In an embodiment, the one or more thiosulfates are selected from the list of: potassium thiosulfate, sodium thiosulfate, ammonium thiosulfate, calcium thiosulfate, magnesium thiosulfate, barium thiosulfate, or combinations thereof. Preferably, the one or more thiosulfates comprise sodium thiosulfate.

In an embodiment, a thiosulfate is added. The thiosulfate is preferably selected from the list of: potassium thiosulfate, sodium thiosulfate, ammonium thiosulfate, calcium thiosulfate, magnesium thiosulfate, barium thiosulfate, or combinations thereof. Preferably, the thiosulfate is sodium thiosulfate.

In an alternative embodiment, sodium dithionite is added instead of thiosulfates. Sodium dithionite is also able to precipitate palladium in an acidic medium. Herein, a compound of palladium with thiosulfate is also precipitated, which is formed from the acidic disproportionation of dithionite.

These thiosulfates can vary in quantity, but are preferably in a range that works well for precipitating the precious metals. In this context, "range" means that the amount of thiosulfate preferably has a fixed value within this range, and not that the amount of thiosulfate is variable or adjustable within this range, unless this is explicitly specified.

In an embodiment, a total amount of thiosulfates between 0.1 and 20 wt.% is added, preferably an amount between 0.1 and 15 wt.%, more preferably between 0.1 and 10 wt.%, even more preferably between 0.1 and 5 wt.%, even more preferably between 0.1 and 1 wt.%. Herein, the total amount of thiosulfates is intended per total amount of liquid waste stream.

In an embodiment, the amount of thiosulfates is adjusted to the concentration of precious metal in the waste stream. Herein, a molar ratio between thiosulfate and precious metal of at least 10:1, preferably at least 20:1, more preferably at least 30:1, is applied. In a further embodiment, the molar ratio is between 10:1 and 100:1, or between 10:1 and 50:1. The term "molar ratio between thiosulfate and precious metal" as used in the context of the present invention refers to the ratio between the total number of moles of thiosulfate ions ($S_2O_3{}^{2-}$) that is added to the aqueous waste stream and the total number of moles of precious metal atoms that is present in the waste stream before the precipitation reaction.

In an embodiment, additives can be added during the mixing. These additives can vary depending on the specific properties of the waste stream and the desired results of the method. Preferably, the additives are selected to improve the efficiency of recovering the precious metals, to increase the quality of the recovered precious metals, or to facilitate the processing of the waste stream.

In a further embodiment, diatomaceous earth or cellulose is added as an additive.

Preferably, the choice of the additive and its amount is determined based on experimental tests and/or theoretical calculations. For example, in some cases it can be advantageous to perform a series of tests to determine the optimal amount and type of additive for a specific waste stream. In other cases, it can be advantageous to use theoretical calculations to predict the optimal amount and type of additive based on the known properties of the waste stream and the precious metals.

In a further preferred embodiment, the method can comprise monitoring the properties of the waste stream and adjusting the amount and/or type of additive based on this monitoring. For example, in some cases it can be advantageous to monitor the pH of the waste stream and to adjust the amount of acid or base that is added based on this monitoring. In other cases, it can be advantageous to monitor the concentration of the precious metals in the waste stream and to adjust the amount of thiosulfate that is added based on this monitoring.

In a preferred embodiment, the mixing is performed at a pH between 1 and 3.5, wherein the waste stream comprises water in an amount of more than 30 wt.%, preferably more than 60 wt.%, and wherein the one or more thiosulfates comprise sodium thiosulfate.

The mixing of the liquid, preferably aqueous, waste stream with one or more thiosulfates preferably takes place in a reactor.

The method can also be described as comprising the steps of:

- supplying a liquid, preferably aqueous, waste stream comprising one or more precious metals;
- mixing the liquid, preferably aqueous, waste stream with one or more thiosulfates, whereby the one or more precious metals are precipitated into a precipitate;
- separating the precipitate.

The liquid waste materials can be supplied in a container. The container can then be connected to the reactor or mixing vessel with a rotating stirrer.

The liquid, preferably aqueous, waste stream can be sampled in the container for screening according to various representative sampling procedures. Immersion vessels can be used to take the samples. The sampling instrument can be lowered via a hatch of the container of the liquid waste materials to the desired depth, opened, held in the correct position until it is full, and retrieved again. When sampling, equal amounts are taken from the top, middle and bottom layers of the container. Sampling can also be done using a sampling instrument with which samples are taken at several levels in the tanks, which are then thoroughly mixed to make a collective sample.

The sample can be analyzed for composition by means of many analytical methods. Non-limiting examples are ICP-OES analysis, oxygen combustion combined with ion chromatography, pH determination, GC-MS analysis, Karl Fischer determination, peroxide and nitro measurement, density determination and/or mixing test with water, and optionally other components that can be added during the process. A process simulation can also be performed in a small-scale reactor or mixing vessel, whereby the composition of the precipitate can then be analyzed by means of various analytical methods. Non-limiting examples are ICP-OES analysis, oxygen combustion combined with ion chromatography, pH determination, GC-MS analysis, Karl Fischer determination, peroxide and nitro measurement, density determination and/or mixing test with water, and optionally other components that can be added during the process.

In an embodiment, the precipitate is filtered using a horizontal plate filter. Herein, the content of the reactor is pressed through a horizontal plate filter. On the filter, a cake is formed containing the valuable precious metals to be recovered.

The filtrate (liquid phase) can be discharged, or can be fed back to the reactor to be pumped through the filtration unit again. The filter cake on the plate filter comprises the precipitate comprising precious metals. The filter cake can undergo nitrogen drying or be directly filled into vessels.

According to an embodiment, the filling of the filter cake is done by gravity. This is advantageous because as a result no energy is required to pump the liquid waste. The filled vessels, with a filter cake enriched in precious metals, can then be subjected to further refining into pure precious metals.

Further refining can comprise, among other things, the thermal treatment of the residue fraction, such as for example incineration in a furnace, whereby metals are converted to metal oxides which are then present in an obtained ash. Afterwards, the metal oxides can be purified from the ash and converted back to metals, for reuse as a catalyst or to be sold. It should be understood that this is only an example and that essentially all possible refining methods can be used in the present invention.

The precipitate is preferably first dried, for example under a nitrogen stream or in vacuum, and then thermally treated, for example incinerated in a furnace at a temperature between 400 and 900 °C, more preferably between 500 and 800 °C. The thermal treatment removes organic residues and converts the precious metal into an oxide or metallic form.

In a further embodiment, the residue of the thermal treatment is subjected to a wetchemical refining process, for example a leaching step with an acid-oxidative mixture to purify the precious metal. The acid-oxidative mixture preferably comprises hydrochloric acid and an oxidizing agent selected from hydrogen peroxide, chlorine, or sodium hypochlorite.

In another or further embodiment, the thus purified precious metal is converted to a metal sponge or granular precious metal, preferably a palladium sponge or platinum sponge, with properties corresponding to the specifications as defined by the London Platinum and Palladium Market (LPPM).

In another or further embodiment, the refining of the residue can also comprise a wetchemical extraction step, wherein present metals are brought into solution in an acidic medium, for example by treatment with a mineral acid such as hydrochloric acid or sulfuric acid. In the thus obtained acidic solution, sulfate ions can then be added, for example by addition of a sulfate salt or sulfuric acid, in order to have specific metals selectively precipitate or flocculate. The thus formed precipitate can then be separated from the liquid phase, for example by filtration or centrifugation, after which the obtained metal-containing fraction can be further dried and optionally thermally treated or purified according to one of the above-described methods.

In a specific embodiment, the separation of the precipitate is performed by means of a horizontal plate filter, wherein the precipitate is retained as a filter cake. In a further embodiment, the filter cake is incinerated in a furnace.

In a second aspect, the invention provides the use of one or more thiosulfates for recovering precious metals from an aqueous waste stream. In a preferred embodiment, the one or more thiosulfates comprise sodium thiosulfate.

In an alternative aspect, the invention provides a method for recovering one or more precious metals from a liquid waste stream, wherein the liquid waste stream is mixed with one or more additives whereby the one or more precious metals are precipitated into a precipitate, and wherein the precipitate is separated.

In one embodiment, the one or more additives are selected from: glycols, thiourea, butylhydroxytoluene, activated carbon, diatomaceous earth, silica, polystyrene resin, polyelectrolyte, 1,3,5-triazine-2,4,6-trithiol trisodium salt or a combination thereof.

In a further embodiment, one or more additives are selected from the list of: cellulose, silica, polystyrene resin, activated carbon, thiourea, diatomaceous earth, 1,3,5-triazine-2,4,6-trithiol trisodium salt, or a combination thereof, preferably silica, activated carbon, thiourea, diatomaceous earth, 1,3,5-triazine-2,4,6-trithiol trisodium salt or a combination thereof.

The activated carbon is preferably in powder form. In another or further preferred embodiment, the polystyrene resin comprises thiourea groups.

In a further or other embodiment, the one or more additives comprise at least 1,3,5-triazine-2,4,6-trithiol trisodium salt.

In another or further embodiment, the additives are selected from: a combination of 1,3,5-triazine-2,4,6-trithiol trisodium salt and activated carbon, a combination of 1,3,5-triazine-2,4,6-trithiol trisodium salt and polystyrene resin, or 1,3,5-triazine-2,4,6-trithiol trisodium salt.

In an embodiment, a total amount of additives between 0.1 and 20 wt.% is added, preferably an amount between 0.1 and 15 wt.%, more preferably between 0.1 and 10 wt.%, even more preferably between 0.1 and 5 wt.%, even more preferably between 0.1 and 4 wt.%, even more preferably between 0.1 and 3 wt.%, even more preferably between 0.1 and 2 wt.%, even more preferably between 0.1 and 1 wt.%. The total amount of additives is expressed per total amount of liquid waste stream.

In a preferred embodiment, the invention relates to a method for recovering at least palladium from a liquid waste stream. This method has proven particularly advantageous for precipitating palladium. The liquid waste stream is mixed with one or more additives, whereby the palladium precipitates into a precipitate. This precipitate is then separated.

This method makes it possible to efficiently and effectively recover palladium from liquid waste streams, which contributes to the sustainability and cost-effectiveness of industrial processes in the pharmaceutical and chemical industry.

In this embodiment, the mixing can be performed at a pH of at least 7, preferably at least 8, more preferably at least 8.5. In another or further embodiment, the mixing is performed at a pH between 7 and 14, preferably between 8 and 12, more preferably between 8 and 10. In an embodiment, the pH can be controlled as known in the prior art, but is preferably performed by addition of a strong acid such as sulfuric acid or hydrochloric acid, preferably hydrochloric acid, or by addition of a strong base such as sodium hydroxide.

In a preferred embodiment, the mixing is performed at a pH between 8 and 10, wherein the waste stream comprises water in an amount of more than 30 wt.%, preferably more than 60 wt.%, and wherein the one or more additives comprise at least 1,3,5-triazine-2,4,6-trithiol trisodium salt.

The method can also be described as comprising the steps of:

- feeding a liquid waste stream comprising one or more precious metals;
- mixing the liquid waste stream with one or more additives, whereby the one or more precious metals are precipitated into a precipitate;
- separating the precipitate.

The embodiments, preferences and parameters described above apply mutatis mutandis to the present embodiment.

This aspect of the invention can be described by means of the following embodiments:

1. A method for recovering one or more precious metals from a liquid waste stream, wherein the one or more precious metals are selected from: gold, silver, iridium, platinum, palladium, rhodium and/or ruthenium, wherein the liquid waste stream is mixed with one or more additives causing the one or more precious metals to be precipitated into a precipitate, and wherein the precipitate is separated, wherein the one or more additives are selected from the list of: thiourea, activated carbon, polystyrene resin, diatomaceous earth, silica, 1,3,5-triazine-2,4,6-trithiol trisodium salt or a combination thereof.

2. The method according to embodiment 1, wherein the precious metals are present as homogeneous catalysts in the liquid waste stream.

3. The method according to any one of the preceding embodiments, wherein the one or more additives are selected from activated carbon, polystyrene resin, diatomaceous earth, 1,3,5-triazine-2,4,6-trithiol trisodium salt or a combination thereof.

4. The method according to any one of the preceding embodiments, wherein the one or more additives comprise at least 1,3,5-triazine-2,4,6-trithiol trisodium salt.

5. The method according to any one of the preceding embodiments, wherein the additives are added in a concentration between 0.1 and 10 wt.%.

6. The method according to any one of the preceding embodiments, wherein the waste stream comprises water in an amount of more than 30 wt.%, preferably more than 60 wt.%.

7. The method according to any one of the preceding embodiments, wherein the mixing is performed at a temperature between 20 and 70°C.

8. The method according to any one of the preceding embodiments, wherein one precious metal is recovered, the precious metal being selected from: gold, silver, iridium, platinum, palladium, rhodium or ruthenium, preferably selected from palladium or ruthenium.

9. The method according to embodiment 8, wherein the precious metal is palladium.

10. The method according to any one of the preceding embodiments, wherein the liquid waste stream is mixed with the one or more additives for at least 5 minutes.

11. The method according to any one of the preceding embodiments, wherein the mixing is performed at a pH between 8 and 10, and wherein the one or more additives comprise at least 1,3,5-triazine-2,4,6-trithiol trisodium salt.

12. The method according to any one of the preceding embodiments, wherein the separation of the precipitate is performed by means of a horizontal plate filter, wherein the precipitate is retained as a filter cake.

13. The method according to embodiment 12, wherein the filter cake is incinerated in a furnace.

14. Use of one or more additives in recovering precious metals from a liquid waste stream, wherein the one or more additives are selected from the list of: thiourea, activated carbon, diatomaceous earth, silica, 1,3,5-triazine-2,4,6-trithiol trisodium salt or a combination thereof.

15. The use according to embodiment 14, wherein the one or more additives comprise at least 1,3,5-triazine-2,4,6-trithiol trisodium salt.

16. The method according to any one of the preceding claims 1-13, wherein the precious metals are present in the waste stream in a total concentration from 1 to 2000 ppm, preferably between 10 and 1500 ppm.

In another or further aspect, the invention provides a method for recovering one or more precious metals from a liquid waste stream, wherein the liquid waste stream is mixed with a combination of one or more thiosulfates and one or more additives as described herein.

The embodiments, preferences and parameters described above apply mutatis mutandis to the present embodiment.

In what follows, the invention is described by means of non-limiting examples that illustrate the invention, and which are not intended or to be interpreted to limit the scope of the invention.

## EXAMPLES

### Example 1

The composition of the example streams are shown in Table 1. The pH of the samples was determined by means of a glass electrode of type InLab Semi-Micro (Mettler-Toledo).

**TABLE 1**

|  | Stream A | Stream B | Stream C |
|---|---|---|---|
| Matrix | Water >90% | Water 69%, THF 8% | Water, acetonitrile 10% |
| Pd concentration (ppm) | 445 | 250 | 1400 |
| pH | 6.06 | 9.76 | 6.61 |

Variation of the thiosulfate concentration

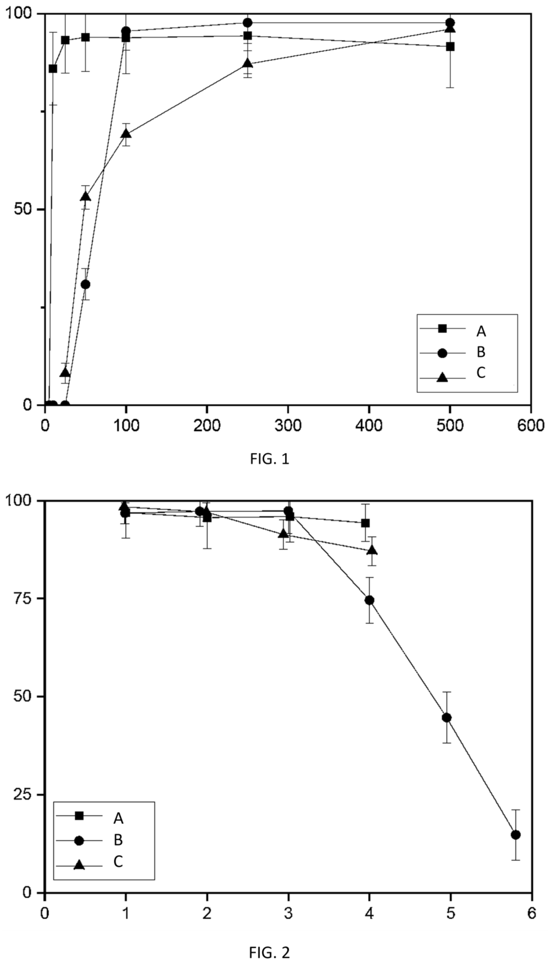

The influence of the thiosulfate concentration was experimentally tested on the streams with pH 3 (acidified, stream A: 3.03; stream B: 3.00; stream C: 2.94) by addition of different amounts of a solution that contained 100.0 g/L of $Na_2S_2O_3$. The added amount varied between 5 and 500 $\mu$L (0.498-33.3 g/L $Na_2S_2O_3$ after dilution). The reaction was performed at 100 °C for the B and C streams and 22 °C for the A stream. The reaction time was 18 hours. The removal percentage of palladium as a function of the added volume of thiosulfate solution ($\mu$L) is shown in **Figure 1.**

Complete removal of palladium from the A stream was already achieved upon addition of 25 $\mu$L of thiosulfate solution to 1000 $\mu$L of the starting solution. For the B stream, 100 $\mu$L was needed and for the C stream 500 $\mu$L. This trend corresponds to the order in which the palladium concentrations increase in the streams.

Variation of the pH

This phenomenon was studied in more detail by performing the precipitation in samples of the three example streams whose pH was adjusted to a value in the range 1-6. 500 $\mu$L of thiosulfate solution (100.0 g/L of $Na_2S_2O_3$) was added per 1000 $\mu$L of the example stream. The reaction time was only 75 min, because precipitation occurred very quickly in the more strongly acidic samples. The results of the TXRF analysis are shown in Figure 2.

Scale-up

The conditions that were applied for the A stream are based on the experiments described above. The A stream was acidified to pH 3.00. For this, a total of 0.20% HCl was needed. To 500 mL of this, 6.25 g $Na_2S_2O_3$ was added (approximately 0.05 mol/L).

Filtration of the reaction mixture yielded a filter cake with a palladium content of 0.57%. The combined filtrate after washing of the filter cake had a palladium content of 0.77 ppm. This yields a removal percentage of Pd of 95% based on the analysis of the filter cake, and 99% based on the analysis of the filtrate.

The conditions that were applied for the B stream are based on the experiments described above. The B stream was acidified to pH 1.00. To 500 mL of this, 12.51 g $Na_2S_2O_3$ was added (approximately 0.10 mol/L).

Filtration of the reaction mixture yielded a filter cake with a palladium content of 6.99%. The combined filtrate after washing of the filter cake had a palladium content of 17.6 ppm. This yields a removal percentage of palladium of 71% based on the analysis of the filter cake, and 83% based on the analysis of the filtrate.

The conditions that were applied for the C stream are based on the experiments described above. The C stream was acidified to pH 0.98. For this, a total of 0.63% HCl was needed. To 500 mL of this, 12.50 g $Na_2S_2O_3$ was added (approximately 0.10 mol/L).

Filtration of the reaction mixture yielded a filter cake with a palladium content of 29.9%. The combined filtrate after washing of the filter cake had a palladium content of 212.2 ppm. This yields a removal percentage of palladium of 80% based on the analysis of the filter cake, and 83% based on the analysis of the filtrate.

The results of the scaled-up experiments are shown in Table 2. The removal percentage for Pd was calculated both based on the filter cake (1) and based on the filtrate (2).

$$\%Vc = \frac{m_c \cdot x_c}{V_i \cdot c_i} \cdot 100\% \qquad (1)$$

$$\%Vl = \frac{V_i \cdot c_i - V_f \cdot c_f}{V_i \cdot c_i} \cdot 100\% \qquad (2)$$

with $m_c$ the mass of the filter cake, $x_c$ the mass fraction of palladium in the filter cake, $V_i$ and $V_f$ the volume of the initial solution and the filtrate, respectively, and $c_i$ and $c_f$ the mass concentration of Pd in the initial solution and the filtrate, respectively.

**TABLE 2**

| Stream | %V Filter cake | %V Filtrate |
|--------|----------------|-------------|
| **A** | 95 | 99 |
| **B** | 71 | 83 |
| **C** | 80 | 83 |

### Example 2

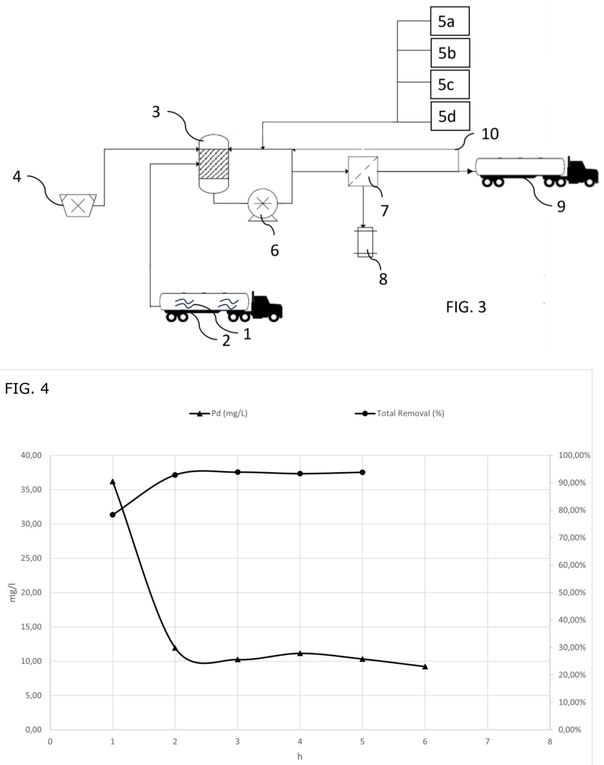

**Figure 3** shows an embodiment of the method according to the invention. An aqueous waste stream **1** comprising precious metals is fed into a container **2,** and pumped over to a reactor **3.** Sodium thiosulfate **4** is added to the aqueous waste stream.

To the discharged waste stream in the reactor, depending on the waste substance and its processing, substances can be added to ensure safe, stable, and efficient processing. This concerns both liquid raw materials and solid raw materials. This concerns pH corrections, coagulants and flocculants, precipitants and reductants, and adsorbents and filter aids. Optionally, liquid additives can be added from feed tanks **5a-d.** Each of the liquid additives is in a separate IBC. Solid additives can also be added. The transport of the solid substances is done by a vacuum pump.

The pH of the mixture is brought to pH 1, for example by means of the addition of HCl and NaOH. In the reactor, the mixture is then mixed for a duration of 8 hours.

Subsequently, the content of the reactor (the liquid phase and the precipitate) is pumped **6** to a horizontal plate filter **7,** where the precipitate is filtered. Here the contents of the reactor are pressed through the horizontal plate filter **7.** On the filter **7,** a cake is formed containing the valuable precious metals to be recovered. The cake is filled into one or more vessels **8.** The cake can optionally, prior to filling, undergo nitrogen drying.

The filter cake can be used for recovering palladium, for example by combustion of the filter cake.

The filtrate (liquid phase) can be discharged into another container **9** or the same container **2,** or can be fed back **10** to the reactor **3,** to be pumped again through reactor **3** or the horizontal plate filter **7.**

### Example 3

A waste stream with a concentration of Pd of 276.62 mg/kg was mixed with various additives in a reactor to precipitate the Pd. The results of the Pd removal are shown in Table 1. Furthermore, a sample comprising 167.03 Pd was mixed with TMT (0.33 wt.%), whereby the remaining Pd quantity and the total Pd removal was measured as a function of the number of hours that the mixture was filtered. These results are shown in **Figure 4.**

**TABLE 3**

| | Additive | wt.% | Remaining Pd (mg/kg) | Pd removal (%) |
|---|----------|------|----------------------|----------------|
| 1 | TMT | 0.13 | 80.11 | 58.20 |
| 2 | TMT | 0.33 | 7.82 | 95.92 |
| 3 | TMT | 0.67 | 27.74 | 85.53 |

(continued)

|  | Additive | wt.% | Remaining Pd (mg/kg) | Pd removal (%) |
|---|---|---|---|---|
| 4 | TMT | 0.67 | 12.91 | 93.03 |
|  | Activated carbon | 1.00 |  |  |
| 5 | TMT | 0.13 | 85.44 | 55.41 |
|  | Activated carbon | 0.51 |  |  |
| 6 | TMT | 0.33 | 9.63 | 94.98 |
|  | Activated carbon | 1.50 |  |  |
| 7 | TMT | 0.67 | 3.60 | 98.12% |
|  | Activated carbon | 3.40 |  |  |
| 8 | TMT | 0.33 | 7.89 | 95.88% |
|  | Polystyrene resin | 0.11 |  |  |

The experimental results show that various additives and their combinations exhibit a high efficiency for the removal of palladium (Pd) from liquid waste streams. At a higher concentration of 0.67% TMT, the addition of activated carbon led to an improvement of 13%, resulting in a removal efficiency of 98.12%.

Furthermore, it was found that the action of TMT was best at a pH of 9.

**Example 4**

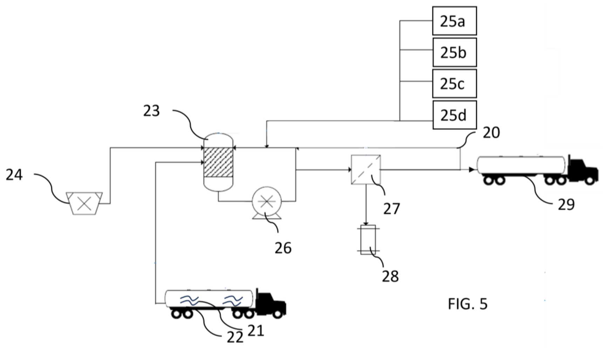

**Figure 5** shows an embodiment of the method according to the invention. A liquid waste stream **21** comprising precious metals is fed into a container **22,** and pumped to a reactor **23.** An additive **24,** such as for example TMT, is added to the liquid waste stream.

To the discharged waste stream in the reactor, further additives from feed tanks can subsequently be added **25a-d.** Here, additives to regulate the pH can also be added. The pH of the mixture can, for example, be brought to pH 9 by means of HCl and NaOH. In the reactor, the mixture is then mixed for a duration of 8 hours.

Subsequently, the content of the reactor (the liquid phase and the precipitate) is pumped **26** to a horizontal plate filter **27,** where the precipitate is filtered. Here, the content of the reactor is pressed through the horizontal plate filter **27.** A cake is formed on the filter **27** containing the valuable precious metals to be recovered. The cake is filled into one or more vessels **28.** The cake can optionally, prior to filling, undergo nitrogen drying.

The filter cake can be used for recovering palladium, for example by combustion of the filter cake.

The filtrate (liquid phase) can be discharged into another **29** or the same **22** container, or can be fed back **20** to the reactor **23,** to be pumped again through reactor **23** or the horizontal plate filter **27.**

**Claims**

1.  A method for recovering one or more precious metals from an aqueous waste stream, wherein the aqueous waste stream comprises water in an amount of more than 20 wt.%, wherein one or more precious metals are present as homogeneous catalysts in the aqueous waste stream, wherein the one or more precious metals are selected from: gold, silver, iridium, platinum, palladium, rhodium and/or ruthenium, wherein the aqueous waste stream is mixed with one or more thiosulfates whereby the one or more precious metals are precipitated into a precipitate, and wherein the precipitate is separated.

2.  The method according to any one of the preceding claims, wherein the mixing is carried out at a pH between 1 and 3.5.

3.  The method according to any one of the preceding claims, wherein the thiosulfates are added in a concentration between 0.1 and 10 wt.%.

4.  The method according to any one of the preceding claims, wherein the thiosulfates are added in a molar ratio between 10: 1 and 100: 1.

5.  The method according to any one of the preceding claims, wherein the waste stream comprises water in an amount of more than 60 wt.%.

6. The method according to any one of the preceding claims, wherein the mixing is carried out at a temperature between 20 and 70°C.

7. The method according to any one of the preceding claims, wherein one precious metal constitutes at least 80 wt.% of the one or more precious metals.

8. The method according to claim 7, wherein the precious metal is palladium.

9. The method according to any one of the preceding claims, wherein the precious metals are present in the waste stream in a total concentration from 1 to 2000 ppm, preferably between 10 and 1500 ppm.

10. The method according to any one of the preceding claims, wherein the aqueous waste stream is mixed with the one or more thiosulfates for at least 5 minutes.

11. The method according to any one of the preceding claims, wherein the one or more thiosulfates are selected from the list of: sodium thiosulfate, ammonium thiosulfate, potassium thiosulfate, calcium thiosulfate, magnesium thiosulfate, barium thiosulfate, or combinations thereof.

12. The method according to any one of the previous claims, wherein the one or more thiosulfates comprise at least potassium thiosulfate and/or sodium thiosulfate.

13. The method according to any one of the preceding claims, wherein the mixing is performed at a pH between 1 and 3.5, wherein the waste stream comprises water in an amount of more than 30 wt.%, preferably more than 60 wt.%, and wherein the one or more thiosulfates comprise sodium thiosulfate.

14. The method according to any one of the preceding claims, wherein the separating of the precipitate is carried out by means of a horizontal plate filter, wherein the precipitate is retained as a filter cake.

15. The method according to claim 14, wherein the filter cake is incinerated in a furnace.

FIG. 1

FIG. 2

FIG. 3

FIG. 4

FIG. 5

EUROPEAN SEARCH REPORT

**Application Number**

EP 25 21 2968

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2022 135956 A (JX NIPPON MINING & METALS CORP) 15 September 2022 (2022-09-15) * paragraphs [0013] - [0034]; figure 1; examples 1,2; tables 1,2 * | 1,3-7, 9-13 | INV. C22B3/44 C22B7/00 C22B11/00 C02F1/70 |
| X | RU 2 120 485 C1 (SHCHELKOVSKIJ Z VTORICHNYKH DR; LLOV) 20 October 1998 (1998-10-20) * page 3, right-hand column, line 44 - page 5, left-hand column, line 4; figure 1; example 1 * | 1-15 | |
| X | RU 2 096 505 C1 (SHCHELKOVSKIJ Z VTORICHNYKH DR [SU]) 20 November 1997 (1997-11-20) * page 3, left-hand column, line 41 - page 3, right-hand column, line 7; example 1 * | 1-15 | |
| X | CN 118 666 390 A (YANGTZE RIVER DELTA RES INSTITUTE UESTC HUZHOU) 20 September 2024 (2024-09-20) * paragraphs [0017] - [0024]; claims 1-4; example 1 * | 1-15 | **TECHNICAL FIELDS SEARCHED (IPC)** C22B C02F |

The present search report has been drawn up for all claims

| Place of search | Date of completion of the search | Examiner |
|---|---|---|
| The Hague | 19 March 2026 | Panitz, J |

EPO FORM 1503 03.82 (P04C01)

## ANNEX TO THE EUROPEAN SEARCH REPORT
## ON EUROPEAN PATENT APPLICATION NO.

EP 25 21 2968

This annex lists the patent family members relating to the patent documents cited in  the above-mentioned European search report.
The members are as contained in the European Patent Office EDP file on
The European Patent Office is in no way liable for these particulars which are merely given for the purpose of information.

19-03-2026

| Patent document cited in search report | | Publication date | Patent family member(s) | | Publication date |
|---|---|---|---|---|---|
| JP 2022135956 | A | 15-09-2022 | JP<br>JP | 7337209 B2<br>2022135956 A | 01-09-2023<br>15-09-2022 |
| RU 2120485 | C1 | 20-10-1998 | NONE | | |
| RU 2096505 | C1 | 20-11-1997 | NONE | | |
| CN 118666390 | A | 20-09-2024 | NONE | | |

EPO FORM P0459

For more details about this annex : see Official Journal of the European Patent Office, No. 12/82